# EUROPÄISCHE PATENTSCHRIFT

(11) **EP 1 977 131 B1**
(45) Veröffentlichungstag und Bekanntmachung des Hinweises auf die Patenterteilung: **02.12.2009**
(21) Anmeldenummer: 07702778.7
(22) Anmeldetag: 16.01.2007
(51) Int. Cl.: F16D 48/08

(54) **VERFAHREN ZUR STEUERUNG EINES KRAFTFAHRZEUG-ANTRIEBSSTRANGS**
METHOD FOR CONTROLLING A MOTOR VEHICLE DRIVE TRAIN
PROCÉDÉ DE COMMANDE D'UNE CHAÎNE CINÉMATIQUE DE VÉHICULE À MOTEUR

(30) Priorität: 26.01.2006 DE 102006003713
(43) Veröffentlichungstag der Anmeldung: 08.10.2008
(73) Patentinhaber: ZF Friedrichshafen AG, 88038 Friedrichshafen (DE)
(72) Erfinder: WALLNER, Stefan, 5163 Mattsee (AT); AMANN, Notker, 88045 Friedrichshafen (DE)
(86) Internationale Anmeldenummer: PCT/EP2007/000314
(87) Internationale Veröffentlichungsnummer: WO 2007/085363

(56) Entgegenhaltungen:
- DE-A1- 10 225 249

## Beschreibung

Die Erfindung betrifft ein Verfahren zur Steuerung eines Kraftfahrzeug-Antriebsstrangs, der einen Verbrennungsmotor, eine Elektromaschine und ein Getriebe umfasst, die über ein Summierungsgetriebe mit zwei Eingangselementen und einem Ausgangselement sowie über eine als Reibungskupplung ausgebildete Überbrückungskupplung miteinander gekoppelt sind, wobei das erste Eingangselement mit der Kurbelwelle des Verbrennungsmotors, das zweite Eingangselement mit dem Rotor der Elektromaschine und das Ausgangselement mit der Eingangswelle des Getriebes drehfest verbunden ist, und bei dem die Überbrückungskupplung zwischen zwei Elementen des Summierungsgetriebes angeordnet ist, wobei bei geöffneter Überbrückungskupplung eine zwischen dem Verbrennungsmotor und der Eingangswelle des Getriebes bestehende Drehzahldifferenz mittels der Elektromaschine und bedarfsweise zusätzlich durch ein geregeltes Schließen der Überbrückungskupplung synchronisiert wird.

Ein Antriebsstrang eines Kraftfahrzeugs der vorbezeichneten Art ist aus der DE 199 34 696 A1, DE 102 25 249 A1 und der DE 101 52 471 A1 bekannt. In diesem bekannten Antriebsstrang ist das Summierungsgetriebe jeweils als ein einfaches Planetengetriebe mit einem Sonnenrad, einem Planetenträger mit mehreren Planetenrädern und einem Hohlrad ausgebildet. Das Hohlrad bildet das erste Eingangselement und ist drehfest mit der Kurbelwelle des Verbrennungsmotors verbunden. Das Sonnenrad bildet das zweite Eingangselement und ist drehfest mit dem Rotor der Elektromaschine verbunden. Der Planetenträger bildet das Ausgangselement und ist drehfest mit der Eingangswelle des Schaltgetriebes verbunden. Die Überbrückungskupplung ist jeweils zwischen dem Sonnenrad und dem Planetenträger des Planetengetriebes angeordnet.

In dem Antriebsstrang nach der DE 199 34 696 A1 ist die Überbrückungskupplung im Gegensatz zur vorliegend vorausgesetzten Ausbildung als Klauenkupplung ausgebildet, so dass die Überbrückungskupplung nur bei Synchronlauf des Verbrennungsmotors und der Eingangswelle des Schaltgetriebes geschlossen werden kann und somit nur eingeschränkt nutzbar ist. Um einen Antrieb des Kraftfahrzeugs allein mit der Elektromaschine zu ermöglichen, ist ein Richtungsfreilauf zwischen der Kurbelwelle und einem Gehäuseteil angeordnet, wodurch die Kurbelwelle gegen ein Rückwärtsdrehen gesichert und damit das Antriebsmoment der Elektromaschine gegen das Gehäuse abgestützt wird. Um bei stehendem Kraftfahrzeug ein Starten des Verbrennungsmotors mit der Elektromaschine zu ermöglichen, ist ein weiterer Richtungsfreilauf zwischen der Eingangswelle des Schaltgetriebes und einem Gehäuseteil angeordnet, wodurch die Eingangswelle gegen ein Rückwärtsdrehen gesichert und damit das Antriebsmoment der Elektromaschine gegen das Gehäuse abgestützt wird.

In dem Antriebsstrang nach der DE 101 52 471 A1 ist die Überbrückungskupplung, wie es für die vorliegende Erfindung vorausgesetzt wird, als Reibungskupplung ausgebildet, so dass die Überbrückungskupplung auch bei einer Drehzahldifferenz zwischen der Eingangswelle des Schaltgetriebes und dem Verbrennungsmotor zur Übertragung eines Drehmomentes im Schlupfbetrieb genutzt werden kann. Um bei stehendem Kraftfahrzeug und in Leerlauf geschaltetem Getriebe einen Impulsstart des Verbrennungsmotors mit der Elektromaschine zu ermöglichen, ist eine weitere Reibungskupplung zwischen der Eingangswelle des Schaltgetriebes und einem Gehäuseteil angeordnet, wodurch die Eingangswelle nach Erreichen einer Startdrehzahl der Elektromaschine zum Starten des Verbrennungsmotors abgebremst werden kann.

Nachfolgend wird in der Beschreibung der Erfindung ohne Einschränkung des Schutzumfangs beispielhaft von einem weitgehend identischen Aufbau des Antriebsstrangs ausgegangen, wobei die Überbrückungskupplung als Reibungskupplung vorausgesetzt wird, insbesondere als nasse Lamellenkupplung, alternativ aber auch als Trockenkupplung ausgeführt sein kann. Alternativ zu der bekannten Anordnung kann die Überbrückungskupplung auch zwischen dem Hohlrad und dem Sonnenrad, also zwischen der Kurbelwelle des Verbrennungsmotors und dem Rotor der Elektromaschine, angeordnet sein.

Im normalen Fahrbetrieb ist die Überbrückungskupplung vollständig geschlossen, so dass das Planetengetriebe blockiert ist und starr umläuft. In diesem Betriebszustand sind die Drehzahlen und die Drehrichtungen des Verbrennungsmotors, der Elektromaschine und der Eingangswelle des Schaltgetriebes identisch. Die Elektromaschine wird in diesem Zustand vorwiegend als Generator zur Versorgung des elektrischen Bordnetzes betrieben, kann jedoch in bestimmten Betriebssituationen, insbesondere in Beschleunigungsphasen des Kraftfahrzeugs, vorübergehend auch als Motor betrieben werden.

Bei einem derartigen Antriebsstrang tritt in bestimmten Betriebssituationen, wie z.B. bei einem Anfahrvorgang und nach einem Schaltvorgang, bei denen die Überbrückungskupplung geöffnet ist, eine Drehzahldifferenz an dem Summierungsgetriebe auf, die anschließend ausgeglichen, also synchronisiert werden muss, um die Überbrückungskupplung möglichst schlupf- und verschleißarm wieder schließen zu können. Die Synchronisierung einer dadurch bedingten Drehzahldifferenz Δn = n_GE - n_VM zwischen der Eingangswelle des Schaltgetriebes und dem Verbrennungsmotor sowie damit auch einer an der Überbrückungskupplung wirksamen Drehzahldifferenz Δn_K erfolgt üblicherweise bei vollständig geöffneter Überbrückungskupplung mittels der Elektromaschine, indem von dieser bei negativer Drehzahldifferenz (Δn < 0) ein in Drehrichtung der Kurbelwelle des Verbrennungsmotors und der Eingangswelle des Schaltgetriebes wirksames positives Drehmoment M_EM > 0 und bei positiver Drehzahldifferenz (Δn > 0) ein entgegen der Drehrichtung der Kurbelwelle des Verbrennungsmotors und der Eingangswelle des Schaltgetriebes wirksames negatives Drehmoment M_EM < 0 erzeugt wird.

Wenn die Elektromaschine das hierzu erforderliche Drehmoment, z.B. auslegungsbedingt oder aufgrund einer entladenen Bordnetzbatterie, nicht aufbringen kann, besteht die Möglichkeit, die Synchronisierung durch ein geregeltes Schließen der Überbrückungskupplung zu unterstützten. Hierbei entsteht allerdings nachteilig eine Verzögerung und ein anschließender Ruck, da die Überbrückungskupplung zunächst aus dem vollständig geöffneten Zustand an den Anlegepunkt gebracht werden muss, bevor ein Drehmoment übertragen und damit die Synchronisierung fortgesetzt werden kann.

Gemäß der DE 102 25 249 A1 die den Oberbegriff von Anspruch 1 offenbart, wird die Überbrückungskupplung zunächst in einen schlupfenden Zustand gebracht, wobei sie den von der elektrischen Maschine nicht abstützbaren Teil des Antriebsmomentes der Antriebsmaschine abstützt, bis das Planetengetriebe synchronisiert ist. Anschließend wird die Überbrückungskupplung endgültig geschlossen.

Andererseits sollte die Überbrückungskupplung so lange wie möglich vollständig geöffnet sein, um eine längere Schlupfphase in Verbindung mit einem unerwünschten Schleppmoment und thermischen Problemen zu vermeiden.

Vor diesem Hintergrund liegt der vorliegenden Erfindung die Aufgabe zugrunde, ein Verfahren anzugeben, mit dem bei einem Antriebsstrang der eingangs genannten Art der Verlauf einer Synchronisierung verbessert werden kann. Ein solches Verfahren soll auch in Antriebssträngen nutzbar sein, die vergleichbare Komponenten, jedoch in anderer Antriebskopplungskombination enthalten.

Die Lösung dieser Aufgabe ergibt sich aus den Merkmalen des Hauptanspruchs. Eine vorteilhafte Weiterbildung ist dem abhängigen Anspruch entnehmbar.

Demnach geht die Erfindung aus von einem Verfahren zur Steuerung eines Kraftfahrzeug-Antriebsstrangs, der einen Verbrennungsmotor, eine Elektromaschine und ein Getriebe umfasst, die über ein Summierungsgetriebe mit zwei Eingangselementen und einem Ausgangselement sowie über eine als Reibungskupplung ausgebildete Überbrückungskupplung miteinander gekoppelt sind, wobei das erste Eingangselement mit der Kurbelwelle des Verbrennungsmotors, das zweite Eingangselement mit dem Rotor der Elektromaschine und das Ausgangselement mit der Eingangswelle des Getriebes drehfest verbunden ist, und bei dem die Überbrückungskupplung zwischen zwei Elementen des Summierungsgetriebes angeordnet ist, wobei bei geöffneter Überbrückungskupplung eine zwischen dem Verbrennungsmotor und der Eingangswelle des Getriebes bestehende Drehzahldifferenz mittels der Elektromaschine und bedarfsweise zusätzlich durch ein geregeltes Schließen der Überbrückungskupplung synchronisiert wird.

In diesem Zusammenhang sei darauf hingewiesen, dass unter dem Begriff "Getriebe" alle Getriebearten zu verstehend sind, die eine echte NeutralStellung mit einer Abtriebsdrehzahl "Null" haben, also nicht etwa durch eine getriebeinteme Drehzahlsummation eine Abtriebsdrehzahl mit dem Wert "Null" erzeugen. Unter dem Begriff "Getriebes" fallen daher beispielsweise Handschaltgetriebe, automatisierte Schaltgetriebe, Planeten-Automatikgetriebe und stufenlose Getriebe.

Weiter geht die Erfindung davon aus, dass die Überbrückungskupplung zu Beginn der Synchronisierung an ihren Anlegepunkt gebracht wird, bevor eine Unterstützung der Elektromaschine durch das Schließen der Überbrückungskupplung erfolgt.

Durch das frühzeitige Anlegen der Reibelemente der Überbrückungskupplung wird diese in Betriebsbereitschaft gebracht und kann unverzüglich zur Unterstützung der Elektromaschine geschlossen werden. Hierdurch entfallen eine sonst durch das Anfahren an den Anlegepunkt bedingte zeitlich Verzögerung und ein damit verbundener vorübergehender Drehmomenteinbruch, der sich in einem unkomfortablen Antriebsruck äußern würde.

Nachteilig dabei können jedoch das durch das Anlegen der Überbrückungskupplung bedingte Schleppmoment und die durch den Reibschlupf bedingte Wärmeentwicklung sein. Erfindungsgemäß ist bei dem Verfahren nun vorgesehen, dass zu Beginn der Synchronisierung geprüft wird, ob das maximale Drehmoment M_EM_max der Elektromaschine und der Ladezustand einer Bordnetzbatterie für die Synchronisierung ausreicht, und dass die Überbrückungskupplung nur bei negativem Prüfergebnis, also wenn das verfügbare Drehmoment M_EM der Elektromaschine nicht ausreicht, an den Anlegepunkt gebracht wird.

Hierzu kann zu Beginn der Synchronisierung das erforderliche Drehmoment M_GE_soll an der Eingangswelle des Getriebes ermittelt und die Überbrückungskupplung ergebnisabhängig gesteuert werden, indem a) die Überbrückungskupplung vollständig geöffnet bleibt; wenn das erforderliche Drehmoment M_GE_soll gleich oder nahe Null ist, indem b) die Überbrückungskupplung vollständig geöffnet bleibt, wenn das erforderliche Drehmoment M_GE_soll größer als Null ist und vollständig von der Elektromaschine aufgebracht werden kann, und indem c) die Überbrückungskupplung an den Anlegepunkt gebracht wird, wenn das erforderliche Drehmoment M_GE_soll größer als Null ist, jedoch nicht vollständig von der Elektromaschine aufgebracht werden kann.

Zur Verdeutlichung der Erfindung ist der Beschreibung eine Zeichnung mit Ausführungsbeispielen beigefügt. In dieser zeigt
- Fig. 1: ein erfindungsgemäßes Anwendungsbeispiel zur Synchronisie- rung einer Drehzahldifferenz in Form eines kombinierten Dreh- zahl- und Drehmomentdiagramms,
- Fig. 2: ein bekanntes Anwendungsbeispiel zur Synchronisierung einer Drehzahldifferenz in Form eines kombinierten Drehzahl- und Drehmomentdiagramms,
- Fig. 3: den allgemeinen Aufbau eines Antriebsstrangs in vereinfachter schematischer Darstellung, und
- Fig. 4: eine bevorzugte praktische Ausführung des Antriebsstrangs ge- mäß Fig. 3 in schematischer Darstellung.

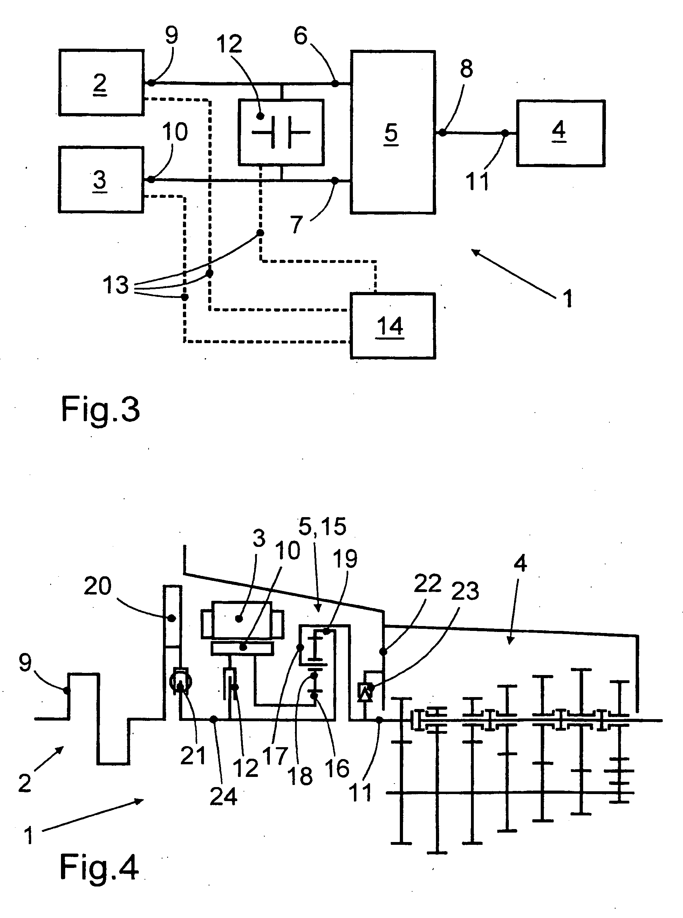

Ein Antriebsstrang 1 gemäß Fig. 3 umfasst einen Verbrennungsmotor 2, eine Elektromaschine 3 und ein Getriebe 4, die über ein Summierungsgetriebe 5 mit zwei Eingangselementen 6, 7 und einem Ausgangselement 8 miteinander gekoppelt sind. Das erste Eingangselement 6 ist mit der Kurbelwelle 9 des Verbrennungsmotors 2, das zweite Eingangselement 7 mit dem Rotor 10 der Elektromaschine 3 und das Ausgangselement 8 mit der Eingangswelle 11 des Getriebes 4 jeweils drehfest verbunden. Eine als Reibungskupplung ausgebildete Überbrückungskupplung 12 ist zwischen zwei Elementen des Summierungsgetriebes 5, vorliegend zwischen den beiden Eingangselementen 6, 7 angeordnet. Der Verbrennungsmotor 2, die Elektromaschine 2 und die Überbrückungskupplung 12 stehen über Sensor- und Steuerleitungen 13 mit einem Steuergerät 14 in Verbindung, über das die Komponenten des Antriebsstrangs 1 koordiniert steuerbar sind.

Eine bevorzugte praktische Ausführung des Antriebsstrangs 1 ist in Fig. 4 abgebildet. In diesem Antriebsstrang 1 ist das Summierungsgetriebe 5 als ein einfaches Planetengetriebe 15 mit einem Sonnenrad 16, einem Planetenträger 17 mit mehreren Planetenrädern 18 und einem Hohlrad 19 ausgebildet. Das Hohlrad 19 bildet das erste Eingangselement 6 und steht über ein Schwungrad 20 und einen Drehschwingungsdämpfer 21 mit der Kurbelwelle 9 des Verbrennungsmotors 2 in Verbindung. Das Sonnenrad 16 bildet das zweite Eingangselement 7 und ist unmittelbar mit dem Rotor 10 der Elektromaschine 3 gekoppelt. Der Planetenträger 17 bildet das Ausgangselement 8 und steht unmittelbar mit der Eingangswelle 11 des als automatisiertes Schaltgetriebe ausgebildeten Getriebes 4 in Verbindung. Ein zwischen der Eingangswelle 11 und einem Gehäuseteil 22 angeordneter Richtungsfreilauf 23 dient zur Abstützung der Eingangswelle 11 bei einem Starten des Verbrennungsmotors 2 durch die Elektromaschine 3. Das Schaltgetriebe 4 ist in Vorgelegebauweise ausgeführt und weist insgesamt sechs Vorwärtsgänge sowie einen Rückwärtsgang auf, die über jeweils eine unsynchronisierte Klauenschaltkupplung selektiv schaltbar sind. Die Überbrückungskupplung 12 ist zwischen dem Rotor 10 der Elektromaschine 3 und einer Verbindungswelle 24 angeordnet, durch die der Verbrennungsmotor 2 mit dem Hohlrad 19 in Verbindung steht.

Bei einem derartigen Antriebsstrang 1 muss eine bei geöffneter Überbrückungskupplung 12 bei einem Anfahrvorgang oder nach einem Schaltvorgang auftretende Drehzahldifferenz Δn = n_GE - n_VM zwischen der Eingangswelle 11 des Schaltgetriebes 4 und dem Verbrennungsmotor 2 synchronisiert werden, bevor die Überbrückungskupplung 12 vollständig geschlossen werden kann.

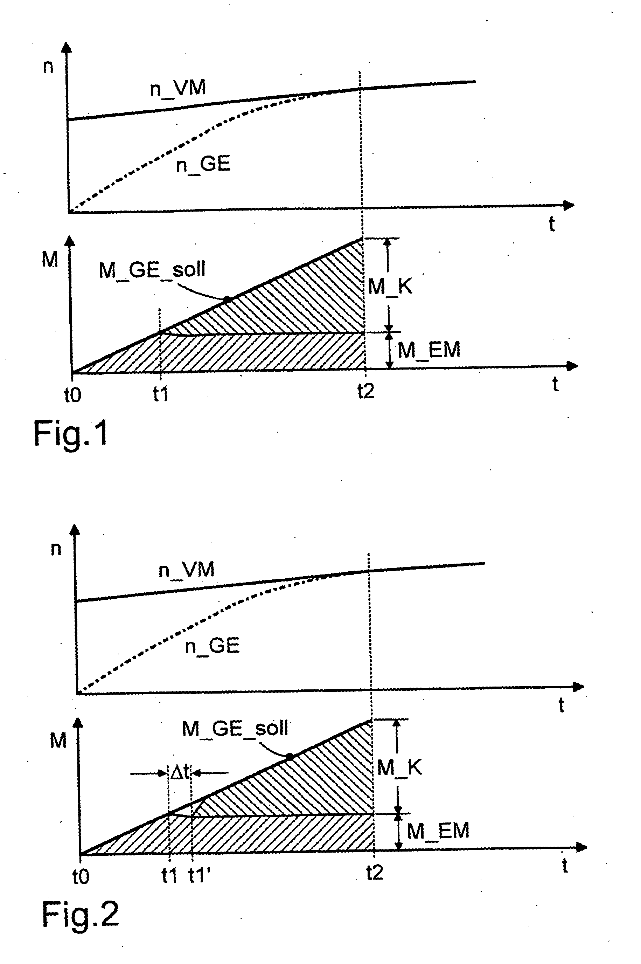

Ein derartiger Synchronisierungsvorgäng ist in Fig. 2 für einen Antriebsstrang 1 mit einem als Planetengetriebe 15 ausgebildeten Summierungsgetriebe 5 gemäß Fig. 4 entsprechend einem herkömmlichen Steuerungsablauf abgebildet. Die Synchronisierung, mit der die Drehzahl n_GE der Eingangswelle 11 des Schaltgetriebes 4 auf die Drehzahl n_VM des Verbrennungsmotors 2 beschleunigt wird, erfolgt zunächst nur mittels der Elektromaschine 3, also durch die Wirkung des Drehmomentes M_EM der Elektromaschine 3. Zum Zeitpunkt t = t1 hat die Elektromaschine 3 ihr maximal mögliches Drehmoment M_EM erreicht, bevor die Synchrondrehzahl (n_GE = n_VM) erreicht ist.

Zur Weiterführung der Synchronisierung wird daher die Überbrückungskupplung 12 geregelt geschlossen und mit dem dadurch erzeugten Drehmoment M_K im Zeitpunkt t = t2 der Synchronlauf erreicht (n_GE = n_VM). Da zum Zeitpunkt t = t1 jedoch die Überbrückungskupplung 12 noch vollständig geöffnet ist und deren Reibelemente zunächst zur Anlage gebracht werden müssen, bevor ein Drehmoment M_K übertragen werden kann, tritt eine zeitliche Verzögerung Δt = t1' - t1 bis zum Ansprechen der Überbrückungskupplung 12 auf, die zu einem vorübergehenden Drehzahleinbruch gegenüber dem gewünschten stetigen Sollmomentverlauf M_GE_soll führt.

In Fig. 1 ist die entsprechende Synchronisierung nach einem erfindungsgemäßen Steuerungsablauf abgebildet. Die Synchronisierung erfolgt zunächst ebenfalls nur mittels der Elektromaschine 3, bis diese im Zeitpunkt t = t1 ihr maximal mögliches Drehmoment M_EM erreicht hat. Nunmehr ist die Überbrückungskupplung 12 jedoch schon zu Beginn der Synchronisierung an ihren Anlegepunkt gebracht worden, wodurch kupplungsintern Leerweg überbrückt und eine Vorbefüllung des Druckraums durchgeführt worden ist. Somit steht das Drehmoment M_K der Überbrückungskupplung 12 zum Zeitpunkt t = t1 spontan zur Verfügung, wodurch eine zeitliche Verzögerung Δt und ein Drehmomenteinbruch wie in dem Beispiel von Fig. 2 vermieden wird.

Zur Vergleichbarkeit der Drehmomente M_GE, M_EM und M_K in den Drehmomentverläufen von Fig. 1 und Fig. 2 sind das Drehmoment M_EM der Elektromaschine 3 und das Drehmoment M_K der Überbrückungskupplung 12 dort jeweils auf die Eingangswelle 11 des Schaltgetriebes reduziert, also mit der jeweils wirksamen Übersetzung i_EM/GE = (1 - i₀) bzw. i_K/GE = (1 - i₀) multipliziert.

Unabhängig von den in den Figuren 3 und 4 gezeigten Ausführungsbeispielen erfasst die Erfindung auch die Verwendung des Verfahrens in Antriebssträngen mit allen anderen möglichen und unterschiedlichen Antriebskoppelungen zwischen dem Verbrennungsmotor 2, der Elektromaschine 3, dem Summierungsgetriebe 5, der Kupplung 12 und dem Getriebe 4, welches hier jedoch nicht gesondert dargestellt ist.

### Bezugszeichen

- 1: Antriebsstrang
- 2: Verbrennungsmotor
- 3: Elektromaschine
- 4: Getriebe, automatisiertes Schaltgetriebe
- 5: Summierungsgetriebe
- 6: (erstes) Eingangselement
- 7: (zweites) Eingangselement
- 8: Ausgangselement
- 9: Kurbelwelle
- 10: Rotor
- 11: Eingangswelle
- 12: Überbrückungskupplung
- 13: Sensor- und Steuerleitung
- 14: Steuergerät
- 15: Planetengetriebe
- 16: Sonnenrad
- 17: Planetenträger
- 18: Planetenrad
- 19: Hohlrad
- 20: Schwungrad
- 21: Drehschwingungsdämpfer
- 22: Gehäuseteil
- 23: Richtungsfreilauf
- 24: Verbindungswelle
- i: Übersetzung
- i_EM/GE: Übersetzung zwischen 3 und 2
- i_K/GE: Übersetzung zwischen 3 und 2
- io: Standübersetzung
- M: Drehmoment
- M_EM: Drehmoment von 3
- M_EM_max: Maximalmoment von 3
- M_GE: Drehmoment von 11
- M_GE_soll: Sollmoment von 11
- M_K: Drehmoment von 12
- n_GE: Drehzahl von 11
- n_VM: Drehzahl von 2
- t: Zeit
- t0: Zeitpunkt
- t1: Zeitpunkt
- t1': Zeitpunkt
- t2: Zeitpunkt
- Δn: Drehzahldifferenz zwischen 11 und 2
- Δn_K: Drehzahldifferenz an 12
- Δt: Zeitspanne

## Patentansprüche

1. Verfahren zur Steuerung eines Kraftfahrzeug-Antriebsstrangs, der einen Verbrennungsmotor (2), eine Elektromaschine (3) und ein Getriebe (4) umfasst, die über ein Summierungsgetriebe (5, 15) mit zwei Eingangselementen (6, 7) und einem Ausgangselement (8) sowie über eine als Reibungskupplung ausgebildete Überbrückungskupplung (12) miteinander gekoppelt sind, indem das erste Eingangselement mit der Kurbelwelle (9) des Verbrennungsmotors (2), das zweite Eingangselement mit dem Rotor (10) der Elektromaschine (3) und das Ausgangselement (8) mit der Eingangswelle (11) des Getriebes (4) drehfest verbunden ist, und in dem die Überbrückungskupplung (12) zwischen zwei Elementen des Summierungsgetriebes (5, 15) angeordnet ist, wobei bei geöffneter Überbrückungskupplung (12) eine zwischen dem Verbrennungsmotor (2) und der Eingangswelle (11) des Getriebes (4) bestehende Drehzahldifferenz mittels der Elektromaschine (3) und bedarfsweise zusätzlich durch ein geregeltes Schließen der Überbrückungskupplung (12) synchronisiert wird, wobei die Überbrückungskupplung (12) zu Beginn der Synchronisierung an ihren Anlegepunkt gebracht wird, bevor eine Unterstützung der Elektromaschine (3) durch das Schließen der Überbrückungskupplung (12) erfolgt, **dadurch gekennzeichnet, dass** zu Beginn der Synchronisierung geprüft wird, ob das maximale Drehmoment (M_EM_max) der Elektromaschine (3) und der Ladezustand einer Bordnetzbatterie für die Synchronisierung ausreicht, und dass die Überbrückungskupplung (12) nur bei negativem Prüfergebnis an den Anlegepunkt gebracht wird.

2. Verfahren nach Anspruch 1, **dadurch gekennzeichnet, dass** zu Beginn der Synchronisierung das erforderliche Drehmoment (M_GE_soll) an der Eingangswelle (11) des Getriebes (4) ermittelt wird, und die Überbrückungskupplung (12) ergebnisabhängig gesteuert wird, indem
a) die Überbrückungskupplung (12) vollständig geöffnet bleibt, wenn das erforderliche Drehmoment (M_GE_soll) gleich oder nahe Null ist,
b) die Überbrückungskupplung (12) vollständig geöffnet bleibt, wenn das erforderliche Drehmoment (M_GE_soll) größter als Null ist und vollständig von der Elektromaschine (3) aufgebracht werden kann und
c) die Überbrückungskupplung (12) an den Anlegepunkt gebracht wird, wenn das erforderliche Drehmoment (M_GE_soll) größer als Null ist, jedoch nicht vollständig von der Elektromaschine (3) aufgebracht werden kann.

## Claims

1. Method for controlling a motor vehicle drive train which comprises an internal combustion engine (2), an electric machine (3) and a transmission (4) which are coupled to one another via a summing gear mechanism (5, 15) with two input elements (6, 7) and an output element (8) and via a converter lockup clutch (12) embodied as a friction clutch, in that the first input element is connected in a rotationally fixed fashion to the crankshaft (9) of the internal combustion engine (2), the second input element is connected in a rotationally fixed fashion to the rotor (10) of the electric machine (3) and the output element (8) is connected in a rotationally fixed fashion to the input shaft (11) of the transmission (4), and in that the converter lockup clutch (12) is arranged between two elements of the summing gear mechanism (5, 15), wherein, when the converter lockup clutch (12) is opened, a rotational speed difference between the internal combustion engine (2) and the input shaft (11) of the transmission (4) is synchronized by means of the electric machine (3) and if necessary additionally by means of controlled closing of the converter lockup clutch (12), wherein the converter lockup clutch (12) is placed at its contact point at the start of the synchronization process before support is provided by the electric machine (3) as a result of the closing of the converter lockup clutch (12), **characterized in that** at the start of the synchronization process it is checked whether the maximum torque (M_EM_max) of the electric machine (3) and the charge state of an on-board electrical system battery are sufficient for the synchronization process, and **in that** the converter lockup clutch (12) is placed at the contact point only when the check has a negative result.

2. Method according to Claim 1, **characterized in that** at the start of the synchronization process the necessary torque (M_GE_setp) at the input shaft (11) of the transmission (4) is determined and the converter lockup clutch (12) is controlled as a function of the result, **in that**
a) the converter lockup clutch (12) remains completely opened if the necessary torque (M_GE_setp) is the same as or close to zero,
b) the converter lockup clutch (12) remains completely opened if the necessary torque (M_GE_setp) is greater than zero and can be applied completely by the electric machine (3) and
c) the converter lockup clutch (12) is placed at the contact point if the necessary torque (M_GE_setp) is greater than zero but cannot be applied completely by the electric machine (3).

## Revendications

1. Procédé de commande d'une chaîne cinématique de véhicule à moteur, qui comprend un moteur à combustion interne (2), un moteur électrique (3) et une boîte de vitesses (4), qui sont accouplés les uns aux autres par le biais d'une transmission d'addition (5, 15) avec deux éléments d'entrée (6, 7) et un élément de sortie (8) ainsi que par le biais d'un embrayage de pontage (12) réalisé sous forme d'embrayage à friction, le premier élément d'entrée étant connecté fixement de manière solidaire en rotation au vilebrequin (9) du moteur à combustion interne (2), le deuxième élément d'entrée au rotor (10) du moteur électrique (3) et l'élément de sortie (8) à l'arbre d'entrée (11) de la boîte de vitesses (4), et l'embrayage de pontage (12) étant disposé entre deux éléments de la transmission d'addition (5, 15), une différence de régime existant entre le moteur à combustion interne (2) et l'arbre d'entrée (11) de la boîte de vitesses (4) lorsque l'embrayage de pontage (12) est ouvert étant synchronisée au moyen du moteur électrique (3) et au besoin en outre par une fermeture régulée de l'embrayage de pontage (12), l'embrayage de pontage (12) étant amené au début de la synchronisation à son point d'application avant qu'une assistance du moteur électrique (3) ait lieu par fermeture de l'embrayage de pontage (12), **caractérisé en ce qu'**au début de la synchronisation, on vérifie si le couple maximal (M_EM_max) du moteur électrique (3) et l'état de charge d'une batterie du réseau de bord suffisent pour la synchronisation, et que l'embrayage de pontage (12) n'est amené au point d'application qu'en cas de résultat négatif.

2. Procédé selon la revendication 1, **caractérisé en ce qu'**au début de la synchronisation, le couple nécessaire (M_GE_soll) est déterminé sur l'arbre d'entrée (11) de la boîte de vitesses (4), et l'embrayage de pontage (12) est commandé en fonction du résultat,
a) l'embrayage de pontage (12) restant complètement ouvert lorsque le couple nécessaire (M_GE_soll) est nul ou proche de zéro,
b) l'embrayage de pontage (12) restant complètement ouvert lorsque le couple nécessaire (M_GE_soll) est supérieur à zéro et peut être appliqué totalement par le moteur électrique (3) et
c) l'embrayage de pontage (12) étant amené au point d'application lorsque le couple nécessaire (M_GE_soll) est supérieur à zéro, mais ne peut pas être complètement appliqué par le moteur électrique (3).
